# EUROPÄISCHE PATENTSCHRIFT

(11) **EP 3 576 920 B1**
(45) Veröffentlichungstag und Bekanntmachung des Hinweises auf die Patenterteilung: **02.11.2022**
(21) Anmeldenummer: 18780060.2
(22) Anmeldetag: 25.09.2018
(51) Int. Cl.: B29C 43/18, B32B 38/00, B32B 38/12, B32B 38/18

(54) **VERFAHREN ZUR HERSTELLUNG EINES VERKLEIDUNGSTEILS FÜR FAHRZEUGE**
METHOD FOR PRODUCING A CLADDING PART FOR VEHICLES
PROCÉDÉ DE FABRICATION D'UNE PIÈCE D'HABILLAGE POUR VÉHICULES

(30) Priorität: 05.10.2017 DE 102017123108
(43) Veröffentlichungstag der Anmeldung: 11.12.2019
(73) Patentinhaber: HIB Trim Part Solutions GmbH, 76646 Bruchsal (DE)
(72) Erfinder: SCHNABEL, Uwe, 76646 Bruchsal (DE)
(74) Vertreter: Staeger & Sperling Partnerschaftsgesellschaft mbB
(86) Internationale Anmeldenummer: PCT/EP2018/075941
(87) Internationale Veröffentlichungsnummer: WO 2019/068515

(56) Entgegenhaltungen:
- WO-A1-2005/065935
- WO-A1-2007/081915
- DE-A1-102015 100 925

## Beschreibung

Die Erfindung betrifft ein Verfahren zur Herstellung eines Verkleidungsteils bzw. Zierteils für Fahrzeuge, insbesondere für den Fahrzeuginnenraum.

Gattungsbildende Verkleidungsteile werden im Stand der Technik als Innenraumverkleidungen, beispielsweise Armaturenverkleidungen von Kraftfahrzeugen eingesetzt. Im montierten Zustand ist bei den Verkleidungsteilen meist lediglich der Verkleidungsteilkörper zu erkennen, da rückseitige Trägerstrukturen oder Halteelemente im Armaturenbrett oder den weiteren Befestigungspositionen versenkt werden. Der Verkleidungsteilkörper bildet mithin die Sichtseite des Verkleidungsteils und umfasst zumeist eine die Optik bestimmende Lage wie beispielsweise Holzfurnier, Karbongewebe oder eine Aluminiumlage.

Ein Standardprozess der bisherigen Herstellung eines Verkleidungsteils gemäß dem Stand der Technik am Beispiel eines Verkleidungsteils mit Holzfurnieroptik umfasst die Herstellungsschritte des Furnierzuschnitts auf die gewünschte Bauteilgröße, die einseitige Kaschierung des Furnierzuschnitts mit einem Kunststoff, so dass ein zweilagiges Zwischenprodukt entsteht. Anschließend folgt die Kalibrierung des Furniers auf die gewünschte Dicke, das dreidimensionale Umformen des zweilagigen, kaschierten Furnierzuschnitts auf die gewünschte Endform des Verkleidungsteilkörpers und das Kunststoff-Hinterspritzen einer Trägerstruktur auf der Seite des Verkleidungsteilkörpers, auf dem die Kaschierung liegt. Anschließend erfolgen Oberflächennachbearbeitungs- und Reparaturschritte sowie das Einfärben des Furniers auf die gewünschte Optik. Schließlich wird auf das Furnier ein Haftvermittler (Primer) und ein Oberflächenveredelungslack aus Polyurethan aufgetragen, wobei der Primer benötigt wird, um mit dem Polyurethanlack eine Verbindung einzugehen.

Der Standardprozess liefert hochqualitative Verkleidungsteile. Nachteilig ist jedoch, dass beim dreidimensionalen Umformen der kaschierten Furniere bzw. Karbongewebe der Umformungsradius beschränkt ist. Bei sehr kleinen Radien, insbesondere von kleiner als 2,5mm, bilden sich leicht Risse oder Brüche im Furnier bzw. der Karbonlage, da die Streckgrenze des Materials überschritten wird. Zudem kann nur sehr langsam umgeformt werden, da im Werkzeug eine Haltezeit nötig ist, die sicherstellt, dass keine Restfeuchte im Furnier verbleibt. Ferner ist insgesamt eine hohe Anzahl an Herstellungsschritten zu durchlaufen, die einen erheblichen Zeitaufwand bedeuten.

Druckschriftlicher Stand der Technik im vorliegenden technischen Gebiet, welcher den Oberbegriff des Anspruchs 1 widerspiegelt, ist in den Dokumenten DE 10 2015 100 925 A1, WO 2005/065 935 A1 und WO 2007/081 915 A1 offenbart.

Der Erfindung liegt deshalb die Aufgabe zugrunde, ein Verfahren zur Herstellung eines Verkleidungsteils bereit zu stellen, das die Möglichkeit bietet, sehr kleine Umformungsradien zu realisieren. Zudem soll das Verfahren die Voraussetzung erfüllen, schneller und kostengünstiger durchgeführt zu werden, so dass die Herstellungszeit pro Verkleidungsteil sinkt.

Diese Aufgabe wird durch die Merkmalskombination gemäß Patentanspruch 1 gelöst.

Erfindungsgemäß wird ein Verfahren zur Herstellung eines Verkleidungsteils für Fahrzeuge mit einem im montierten Zustand eine Verkleidung bildenden Verkleidungsteilkörper vorgeschlagen. Bei dem Verfahren wird eine sich zweidimensional in einer Ebene erstreckende Sandwichplatte mit mindestens einer transparenten thermoplastischen Oberlage, einer vorgefertigten, nachbearbeitungsfreien Zwischenlage und einer thermoplastischen Unterlage gebildet. Die sich somit ergebende mindestens dreilagige Sandwichplatte wird anschließend unter Wärmeeinfluss dreidimensional in ein den Verkleidungsteilkörper bildendes Sandwichelement umgeformt.

Vorliegend wird zwischen den Begriffen Verkleidungsteil und Verkleidungsteilkörper unterschieden. Der Verkleidungsteilkörper stellt das im montierten Zustand sichtbare Hauptelement des Verkleidungsteils dar und kann das Verkleidungsteil sogar alleine bilden, wenn es beispielsweise verklebt werden soll. Es ist jedoch auch eine Ausführung des erfindungsgemäßen Verfahrens, den Verkleidungsteilkörper mit weiteren Elementen, wie einem Trägerteil oder Befestigungsmitteln (z.B. Klipse, Haken, Verrastungen) oder Rahmen zu versehen, die dann ebenfalls Elemente des Verkleidungsteils werden.

Zur Bestimmung der Richtungen gilt, dass die Oberlage zur vorderen Sichtseite des Verkleidungsteils, die Unterlage zur Rückseite bzw. Einbauseite gerichtet ist. Die vorgefertigte, nachbearbeitungsfreie Zwischenlage ist dadurch gekennzeichnet, dass sie von Anfang an den gewünschten Endzustand aufweist. Eine mögliche Einfärbung ist bereits erfolgt. Auch entspricht die Zwischenlagendicke der vorab festgelegten angestrebten Lagendicke. In bevorzugten Ausführungsvarianten ist die vorgefertigte, nachbearbeitungsfreie Zwischenlage durch ein vorgefärbtes Furnier, eine Folie, ein Gewebe beispielsweise Karbongewebe, ein vorgefärbtes Papier oder entsprechend in der Technik einsetzbare Dekorträger gebildet.

Das erfindungsgemäße Verfahren erzeugt zunächst die mindestens dreilagige zweidimensionale Sandwichplatte. Die für die Optik des Verkleidungsteils wesentliche Zwischenlage wird beidseitig durch die thermoplastische Oberlage und die thermoplastische Unterlage geschützt. Das thermoplastische Material der Oberlage und Unterlage kann unter Wärmeeinfluss zusammen mit der Zwischenlage dreidimensional umgeformt werden, wobei die Oberlage und die Unterlage die Zwischenlage im Prozessschritt des Umformens durch beidseitigen Druck schützen, die Streckgrenze der Zwischenlage dadurch erhöhen und eine Rissbildung oder einen Bruch auch bei sehr kleinen Radien verhindern. Die Temperatur wird dabei auf einen Mindestwert festgelegt, der ausreichend hoch ist, dass das jeweils verwendete thermoplastische Material den Umformprozess ohne Beschädigung oder optische Einbußen durchläuft. Ein vorteilhafter Temperaturwert ist die jeweilige Glasübergangstemperatur Tg des Thermoplasten.

Das erfindungsgemäße Verfahren zeichnet sich in einer Ausführungsvariante dadurch aus, dass zumindest die Unterlage in einem Bandkaschierprozess auf die Zwischenlage aufgebracht wird. Der Bandkaschierprozess erfolgt durch Zuführung der Zwischenlage als Bandmaterial von einer Rolle und anschließendes Aufkaschieren der thermoplastischen Unterlage.

Die Oberlage wird in einer Ausführung gemäß der Erfindung ebenfalls in einem Bandkaschierprozess oder im Durchlauflackierverfahren auf die Zwischenlage aufgebracht. Es entsteht eine zweidimensionale Sandwichplatte in der Größe des Rollen- bzw. Bandmaterials als Ausgangs-Endlosmaterial. Vorteilhaft ist dabei ferner, dass die Zwischenlage in dem Bandkaschierprozess bereits vollständig entfeuchtet wird.

Bei einer Verwendung des Bandkaschierprozesses wird die Sandwichplatte in einem Bandlaufverfahren hergestellt und vor dem Umformen aus einer Sandwichbahn in eine vorbestimmte Endform des Verkleidungsteilkörpers zugeschnitten. Die Herstelldauer der mindestens dreilagigen Sandwichplatte mit einer Zwischenlage, die bereits den gewünschten Endzustand hinsichtlich ihrer Farbgebung und Oberflächenstruktur aufweist, sowie das Zuschneiden einzelner Sandwichplattensegmente aus dem Bandmaterial verkürzt die Herstellungszeit des Basismaterials gegenüber dem beschriebenen Standardprozess bereits vor Einleitung eines Umformprozesses ganz wesentlich.

Auch der Umformprozess selbst erfordert bei dem erfindungsgemäßen Verfahren weniger Zeitaufwand. Durch die Bereitstellung einer mindestens dreilagigen Sandwichplatte mit Oberlage und Unterlage kann die Umformung schneller erfolgen. Auch die Nachhaltzeit im Umformwerkzeug ist deutlich geringer, da die Entfeuchtung bereits während des Kaschierens der Unterlage erfolgte.

Vorteilhafte Ausführungsbeispiel sehen vor, dass die Oberlage eine Lagendicke von 0,2-0,4mm, die Zwischenlage eine Lagendicke von 0,2-0,3mm und die Unterlage eine Lagendicke von 0,15-0,3mm aufweisen. Besonders günstig ist eine Lösung, bei der die Lagendicke der Oberlage, der Zwischenlage und die Unterlage jeweils identisch ist. Dies führt dazu, dass die vorgefertigte, nachbearbeitungsfreie Zwischenlage als eine Schicht der Sandwichplatte gebildet wird, die der neutralen Faser (auch Nulllinie genannt) entspricht. Die neutrale Faser ist im Umformprozess die Schicht des Sandwichplattenquerschnitts, deren Länge sich beim Biegen nicht ändert. Somit ist die Zwischenlage als Mittellage im besten Fall während des Umformungsprozesses belastungsfrei, in jedem Fall reduzieren sich jedoch die Zug-, Druck- und Scherspannungen auf die Zwischenlage beim dreidimensionalen Umformen der Sandwichplatte.

Die thermoplastische Oberlage wird vorzugsweise durch eine thermoplastische Polyurethanfolie (TPU-Folie) und/oder mindestens einer Schicht aus Polyurethanlack (z.B. Polyurethan DD-Lack), die thermoplastische Unterlage durch eine thermoplastische Polyurethanschicht und/oder eine Kaschierung umfassend einen Thermoplast mit geflochtenem Gewebe gebildet. Die thermoplastische Polyurethanschicht kann dabei als Ausführungsbeispiel ebenfalls eine TPU-Folie sein.

Auch im erfindungsgemäßen Verfahren wird vorgesehen, dass auf die Oberlage des dreidimensional umgeformten Verkleidungsteilkörpers als Obeflächenveredelungsschicht eine Schicht aus Polyurethanlack aufgetragen wird. Die Verwendung der thermoplastischen Polyurethanfolie und/oder mindestens einer Schicht aus Polyurethanlack für die Oberlage hat zudem den Vorteil, dass auf einen Haftvermittler (Primer) verzichtet werden kann, um die Obeflächenveredelungsschicht aufzutragen. Da sowohl die Oberlage als auch die Obeflächenveredelungsschicht aus demselben Material oder zumindest aus Polyurethanmaterial gebildet sind, gehen die Schichten auch ohne Primer eine dauerhaft feste Verbindung ein, beispielsweise im RIM-Verfahren (Reaction Injection Moulding-Verfahren). Die Zwischenlage ist somit primerfrei ausgebildet. Der im Standardprozess beschriebene Zusatzschritt des Auftragens eines Primers kann vermieden werden. Dies verkürzt die Herstellungsdauer und Herstellungskosten weiter.

In einer Weiterbildung des Verfahrens wird die Unterlage des den Verkleidungsteilkörper bildenden Sandwichelements nach dem Umformen im Spritzgussverfahren mit Kunststoff hinterspritzt. Dabei ist auch eine Variante des Spritzprägens mit umfasst. Beim Spritzprägen wird während des Spritzgießens über den Spritzdruck ohne Bruchstellen oder Risse ein Muster durch die Unterlage hindurch auf der Zwischenlage erzeugt. Das Muster wird durch die Werkzeuginnenwand bestimmt und ist somit variabel festlegbar. Ferner kann hierdurch eine Nut für eine Lisene oder eine vorbestimmte Strukturierung der Oberfläche der Zwischenlage mit hoher Wiederholungsgenauigkeit erzeugt werden.

Das erfindungsgemäße Verfahren umfasst ferner, dass die Zwischenlage insbesondere durch ein vorgefärbtes Furnier, eine Folie oder ein vorgefärbtes Papier und die Oberlage aus einer Schicht Polyurethanlack und einer Schicht thermoplastischer Polyurethanfolie gebildet sind, und zwischen der Schicht Polyurethanlack und der Schicht thermoplastischer Polyurethanfolie eine Gewebelage angeordnet ist. Die Gewebelage ist vorzugsweise als Metallgewebe ausgebildet, so dass eine Kombination aus Metall auf einem Furnier bzw. Papier herstellbar ist. Die Gewebelage wird erfindungsgemäß vorgeschrumpft als Rollenmaterial über eine Rolle zugeführt und exakt positioniert auf die Sandwichplatte aufgelegt bzw. aufgezogen. Die Anbindung an die Oberflächenveredelungsschicht ist weiterhin ausschließlich über das Polyurethanmaterial gegeben.

Die Erfindung umfasst neben dem Verfahren auch ein Verkleidungsteil, das nach einem Ausführungsbeispiel des vorstehend beschriebenen Verfahrens hergestellt wurde.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: einen erfindungsgemäßen Verfahrensablauf in einem Flussdiagramm;
- Fig. 2: eine Gegenüberstellung eines erfindungsgemäßen Verfahrens zu dem Standardverfahren.

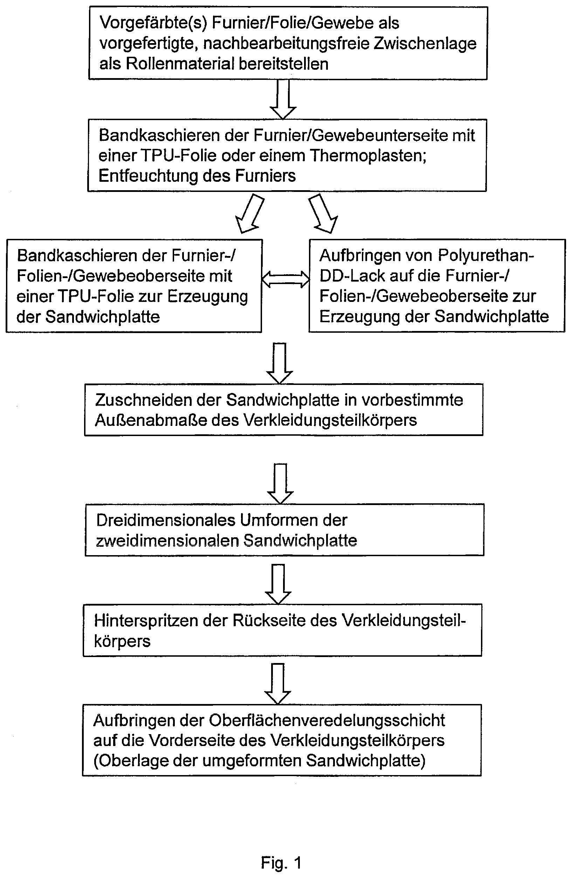

In Figur 1 ist beispielhaft ein Verfahrensablauf unter Nutzung des Bandlaufverfahrens und Bereitstellung des Ausgangsmaterials für die Zwischenlage von einer Rolle dargestellt. Als Zwischenlage wird ein vorgefärbtes, nachbearbeitungsfreies Furnier oder Karbongewebe bereitgestellt. Anschließend wird auf die Zwischenlage im Bandkaschierprozess eine TPU-Folie oder ein Thermoplast mit Gewebe als Unterlage erzeugt. Soweit ein Furnier verwendet wird, wird dieses bereits beim Bandkaschieren entfeuchtet. Die Oberlage kann wahlweise im Bandkaschierprozess und/oder im Lackierverfahren auf die Sichtseite der Zwischenlage aufgebracht werden, wobei als Lack Polyurethan DD-Lack bevorzugt ist. Die sich ergebende Sandwichplatte entspricht im Bandlaufverfahren einem Endlosmaterial, aus dem die Elemente ausgeschnitten werden, die später den Verkleidungsteilkörper bilden. Die Außenabmaße des Verkleidungsteilkörpers sind damit festgelegt, die Sandwichplatte ist jedoch noch ein zweidimensionaler Plattenkörper. Anschließend erfolgt die Umformung unter Wärmeeinbringung, so dass der dreidimensionale Verkleidungsteilkörper in seine Endform gebracht wird. Die Rückseite, d.h. die Unterlage wird mit Kunststoff beispielsweise zur Anbringung einer Trägerstruktur hinterspritzt. Vorderseitig wird auf die Oberlage des Verkleidungsteilkörpers eine Oberflächenveredelungsschicht aus Polyurethanlack aufgetragen.

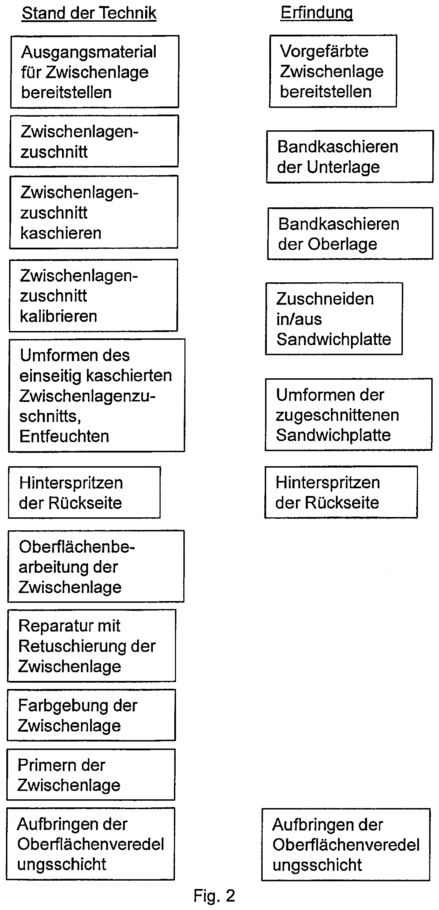

Figur 2 stellt die Vorteile des erfindungsgemäßen Verfahrens in der Ausführungsvariante gemäß Figur 1 dem beschriebenen Standardverfahren gegenüber. Mehrere Verfahrensschritte sind bei dem erfindungsgemäßen Verfahren nicht weiter nötig, wie beispielsweise das Kaschieren und Kalibrieren jedes einzelnen Bauteils, die Oberflächenbearbeitung und Reparatur des Furniers oder Gewebes, die Farbgebung des Furniers, der Folie oder des Gewebes und das Primern. Zwar sind die Kosten für das vorgefertigte, nachbearbeitungsfreie Ausgangsmaterial der Zwischenlage, d.h. ein entsprechend abschließend vorbereitetes und bereits eingefärbtes Furnier bzw. (Karbon)-gewebe oder eine entsprechende Folie teurer, jedoch wird der monetäre Mehraufwand im Verfahrensverlauf mehr als ausgeglichen. Das erfindungsgemäße Verfahren reduziert die benötigte Herstellungszeit pro Verkleidungsteil um ca. 50% gegenüber dem Standardprozess, die Herstellkosten um ca. 30%. Nicht berücksichtigt sind dabei sogar noch die Durchlaufzeiten der Bauteile, die Ausschusskosten sowie die Bewertung der Logistikflächen zwischen den einzelnen Prozessen.

## Patentansprüche

1. Verfahren zur Herstellung eines Verkleidungsteils für Fahrzeuge mit einem im montierten Zustand eine Verkleidung bildenden Verkleidungsteilkörper, wobei eine sich zweidimensional in einer Ebene erstreckende Sandwichplatte mit mindestens einer transparenten thermoplastischen Oberlage, einer vorgefertigten, nachbearbeitungsfreien Zwischenlage und einer thermoplastischen Unterlage gebildet wird, wobei die mindestens dreilagige Sandwichplatte anschließend unter Wärmeeinfluss dreidimensional in ein den Verkleidungsteilkörper bildendes Sandwichelement umgeformt wird, **dadurch gekennzeichnet, dass** die Zwischenlage durch ein vorgefärbtes Furnier, eine vorgefertigte Folie oder ein vorgefärbtes Papier und die Oberlage aus einer Schicht Polyurethanlack und einer Schicht thermoplastischer Polyurethanfolie gebildet sind, und wobei zwischen der Schicht Polyurethanlack und der Schicht thermoplastischer Polyurethanfolie eine Gewebelage angeordnet ist, wobei die Gewebelage vorgeschrumpft als Rollenmaterial über eine Rolle zugeführt und auf die Sandwichplatte aufgelegt wird.

2. Verfahren nach Anspruch 1, **dadurch gekennzeichnet, dass** zumindest die Unterlage in einem Bandkaschierprozess auf die Zwischenlage aufgebracht wird.

3. Verfahren nach Anspruch 1 oder 2, **dadurch gekennzeichnet, dass** die Oberlage in einem Bandkaschierprozess oder im Durchlauflackierverfahren auf die Zwischenlage aufgebracht wird.

4. Verfahren nach Anspruch 2 oder 3, **dadurch gekennzeichnet, dass** die Zwischenlage in dem Bandkaschierprozess entfeuchtet wird.

5. Verfahren nach einem der vorhergehenden Ansprüche, **dadurch gekennzeichnet, dass** die Sandwichplatte in einem Bandlaufverfahren hergestellt und vor dem Umformen aus eine Sandwichbahn in eine vorbestimmte Endform des Verkleidungsteilkörpers zugeschnitten wird.

6. Verfahren nach einem der vorhergehenden Ansprüche, **dadurch gekennzeichnet, dass** die vorgefertigte, nachbearbeitungsfreie Zwischenlage durch ein vorgefärbtes Furnier, vorgefärbtes Papier, eine vorgefertigte Folie, ein Gewebe insbesondere eine Echtkarbongewebelagelage oder einen Dekorträger gebildet ist.

7. Verfahren nach einem der vorhergehenden Ansprüche, **dadurch gekennzeichnet, dass** die vorgefertigte, nachbearbeitungsfreie Zwischenlage eine Schicht der Sandwichplatte gebildet wird, die der neutralen Faser entspricht.

8. Verfahren nach einem der vorhergehenden Ansprüche, **dadurch gekennzeichnet, dass** die thermoplastische Oberlage durch eine thermoplastische Polyurethanfolie und/oder mindestens einer Schicht aus Polyurethanlack gebildet ist.

9. Verfahren nach einem der vorhergehenden Ansprüche, **dadurch gekennzeichnet, dass** die thermoplastische Unterlage durch eine thermoplastische Polyurethanschicht und/oder eine Kaschierung umfassend einen Thermoplast mit geflochtenem Gewebe gebildet ist.

10. Verfahren nach einem der vorhergehenden Ansprüche, **dadurch gekennzeichnet, dass** die Oberlage eine Lagendicke von 0,2-0,4mm, die Zwischenlage eine Lagendicke von 0,2-0,3mm und die Unterlage eine Lagendicke von 0,15-0,3mm aufweisen, wobei insbesondere die Oberlage, die Zwischenlage und die Unterlage jeweils eine identische Lagendicke aufweisen.

11. Verfahren nach einem der vorhergehenden Ansprüche, **dadurch gekennzeichnet, dass** auf die Oberlage des dreidimensional umgeformten Verkleidungsteilkörpers als Obeflächenveredelungsschicht eine Schicht aus Polyurethanlack aufgetragen wird.

12. Verfahren nach einem der vorhergehenden Ansprüche, **dadurch gekennzeichnet, dass** die Unterlage des den Verkleidungsteilkörper bildenden Sandwichelements im Spritzgussverfahren mit Kunststoff hinterspritzt wird.

13. Verkleidungsteil, **dadurch gekennzeichnet, dass** das Verkleidungsteil nach dem Verfahren gemäß einem der vorhergehenden Ansprüche hergestellt ist.

## Claims

1. A method for producing a cladding part for vehicles having a cladding part body forming a panel in the mounted state, wherein a sandwich plate extending two-dimensionally in a plane having at least one transparent thermoplastic upper layer, a prefinished, postprocessing-free intermediate layer, and a thermoplastic base layer is formed, wherein the at least three-layered sandwich plate is subsequently three-dimensionally formed under the influence of heat into a sandwich element forming the cladding part body, **characterized in that** the intermediate layer is formed by a pre-colored veneer, a prefinished film, or a pre-colored paper and the upper layer is formed by a layer of polyurethane lacquer and a layer of thermoplastic polyurethane film, and wherein a fabric layer is arranged between the layer of polyurethane lacquer and the layer of thermoplastic polyurethane film, and wherein the fabric layer is supplied pre-shrunk as a roll material via a roll and is laid on the sandwich plate.

2. The method according to Claim 1, **characterized in that** at least the base layer is applied to the intermediate layer in a strip lamination process.

3. The method according to Claim 1 or 2, **characterized in that** the upper layer is applied to the intermediate layer in a strip lamination process or in the continuous lacquering method.

4. The method according to Claim 2 or 3, **characterized in that** the intermediate layer is dehumidified in the strip lamination process.

5. The method according to any one of the preceding claims, **characterized in that** the sandwich plate is produced in a strip run method and is cut to size from a sandwich strip into a predetermined final shape of the cladding part body before the forming.

6. The method according to any one of the preceding claims, **characterized in that** the prefinished, postprocessing-free intermediate layer is formed by a prefinished veneer, pre-colored paper, a prefinished film, a fabric, in particular a real carbon fabric layer, or a decorative carrier.

7. The method according to any one of the preceding claims, **characterized in that** the prefinished, postprocessing-free intermediate layer is formed by a layer of the sandwich plate which corresponds to the neutral fiber.

8. The method according to any one of the preceding claims, **characterized in that** the thermoplastic upper layer is formed by a thermoplastic polyurethane film and/or at least one layer made of polyurethane lacquer.

9. The method according to any one of the preceding claims, **characterized in that** the thermoplastic base layer is formed by a thermoplastic polyurethane layer and/or a lamination comprising a thermoplastic with braided fabric.

10. The method according to any one of the preceding claims, **characterized in that** the upper layer has a layer thickness of 0.2-0.4 mm, the intermediate layer has a layer thickness of 0.2-0.3 mm, and the base layer has a layer thickness of 0.15-0.3 mm, wherein in particular the upper layer, the intermediate layer, and the base layer each have an identical layer thickness.

11. The method according to any one of the preceding claims, **characterized in that** a layer made of polyurethane lacquer is applied to the upper layer of the three-dimensionally formed cladding part body as a surface finishing layer.

12. The method according to any one of the preceding claims, **characterized in that** the base layer of the sandwich element forming the cladding part body is back injected using plastic in the injection molding method.

13. A cladding part, **characterized in that** the cladding part is produced according to the method according to any one of the preceding claims.

## Revendications

1. Procédé de fabrication d'une pièce d'habillage pour des véhicules, comprenant un corps de pièce d'habillage qui forme à l'état monté un habillage, dans lequel un panneau sandwich s'étendant dans deux dimensions dans un plan et pourvu d'au moins une couche supérieure thermoplastique transparente, d'une couche intermédiaire préfabriquée, ne nécessitant aucune retouche, et d'une couche inférieure thermoplastique, dans lequel le panneau sandwich à au moins trois couches est ensuite, sous l'effet de la chaleur, façonné en trois dimensions en un élément sandwich formant le corps de pièce d'habillage,
**caractérisé en ce que** la couche intermédiaire est formée par une feuille de placage préteinte, un film préfabriqué ou un papier préteint, et la couche supérieure est formée à partir d'une couche de vernis en polyuréthane et d'une couche de film en polyuréthane, et dans lequel une couche de tissu est disposée entre la couche de vernis en polyuréthane et la couche de film en polyuréthane thermoplastique, la couche de tissu étant prérétrécie et amenée sous forme de matériau en rouleau par l'intermédiaire d'un rouleau et posée sur le panneau sandwich.

2. Procédé selon la revendication 1, **caractérisé en ce qu'**au moins la couche inférieure est appliquée sur la couche intermédiaire dans un processus de laminage en bande.

3. Procédé selon la revendication 1 ou 2, **caractérisé en ce que** la couche supérieure est appliquée sur la couche intermédiaire dans un processus de laminage en bande ou par un procédé de peinture en continu.

4. Procédé selon la revendication 2 ou 3, **caractérisé en ce que** la couche intermédiaire est déshumidifiée lors du processus de laminage en bande.

5. Procédé selon l'une quelconque des revendications précédentes, **caractérisé en ce que** le panneau sandwich est fabriqué dans un procédé à entraînement par bande, et avant le façonnage, est découpé dans une bande sandwich selon une forme définitive prédéterminée du corps de pièce d'habillage.

6. Procédé selon l'une quelconque des revendications précédentes, **caractérisé en ce que** la couche intermédiaire préfabriquée, ne nécessitant aucune retouche, est formée par une feuille de placage préteinte, du papier préteint, un film préfabriqué, un tissu, en particulier une couche de tissu à fibres de carbone véritable ou un support de décor.

7. Procédé selon l'une quelconque des revendications précédentes, **caractérisé en ce que** la couche intermédiaire préfabriquée, ne nécessitant aucune retouche, est formée comme une couche du panneau sandwich qui correspond à la fibre neutre.

8. Procédé selon l'une quelconque des revendications précédentes, **caractérisé en ce que** la couche supérieure thermoplastique est formée par un film en polyuréthane thermoplastique et/ou au moins une couche de vernis en polyuréthane.

9. Procédé selon l'une quelconque des revendications précédentes, **caractérisé en ce que** la couche intérieure thermoplastique est formée par une couche en polyuréthane thermoplastique et/ou un laminage comprenant un thermoplaste à tissu natté.

10. Procédé selon l'une quelconque des revendications précédentes, **caractérisé en ce que** la couche supérieure présente une épaisseur de couche de 0,2 à 0,4 mm, la couche intermédiaire présente une épaisseur de couche de 0,2 à 0,3 mm, et la couche inférieure présente une épaisseur de couche de 0,15 à 0,3 mm, la couche supérieure, la couche intermédiaire et la couche inférieure présentant en particulier respectivement une épaisseur de couche identique.

11. Procédé selon l'une quelconque des revendications précédentes, **caractérisé en ce que** sur la couche supérieure du corps de pièce d'habillage façonné en trois dimensions, une couche de vernis en polyuréthane est appliquée comme couche de finition de surface.

12. Procédé selon l'une quelconque des revendications précédentes, **caractérisé en ce que** la couche inférieure de l'élément sandwich formant le corps de pièce d'habillage est injectée par l'arrière avec une matière plastique dans un procédé de moulage par injection.

13. Pièce d'habillage, **caractérisé en ce que** la pièce d'habillage est fabriquée selon le procédé selon l'une quelconque des revendications précédentes.
